# EUROPEAN PATENT SPECIFICATION

(11) **EP 3 453 361 B1**
(45) Date of publication and mention of the grant of the patent: **14.04.2021**
(21) Application number: 16906373.2
(22) Date of filing: 27.06.2016
(51) Int. Cl.: A61C 13/08, A61C 13/00, B23C 1/04, B23C 3/00, A61C 13/12, B23Q 11/00, B23Q 11/08, B23Q 11/10, B23Q 17/09, B23Q 17/22, B23Q 39/02

(54) **ARTIFICIAL TOOTH MANUFACTURING DEVICE**
VORRICHTUNG ZUR HERSTELLUNG EINES KÜNSTLICHEN ZAHNS
DISPOSITIF DE FABRICATION DE DENT ARTIFICIELLE

(30) Priority: 24.06.2016 KR 20160079621
(43) Date of publication of application: 13.03.2019
(73) Proprietor: DDS Company, Geumcheon-gu, Seoul 08591 (KR)
(72) Inventor: MOON, Jung Bon, Busan 48050 (KR); SIM, Un Seob, Incheon 22001 (KR); KIM, Tae Hoon, Incheon 21974 (KR); KIM, Je Sung, Seoul 08025 (KR); KIM, Sang Un, Seoul 05240 (KR); PARK, Myung Su, Yongin-si Gyeonggi-do 16875 (KR); KIM, In, Suwon-si Gyeonggi-do 16620 (KR)
(74) Representative: M. Zardi & Co S.A.
(86) International application number: PCT/KR2016/006868
(87) International publication number: WO 2017/222098

(56) References cited:
- EP-A1- 0 455 853
- DE-A1- 3 627 658
- DE-A1-102009 001 428
- JP-A- 2001 198 768
- JP-A- 2013 212 392
- KR-B1- 100 582 450
- KR-B1- 100 627 677
- KR-B1- 100 979 693
- KR-B1- 101 274 015
- US-A- 4 831 785
- US-A1- 2007 277 609
- US-A1- 2009 129 882
- US-A1- 2011 179 630

## Description

### [Technical Field]

The present invention relates to an artificial tooth machining apparatus, and more particularly, to an artificial tooth machining apparatus capable of enhancing machining precision and protecting a workpiece and first and second tools from heat and frictional contact when the workpiece is machined by supplying water or air to the tools by a supply unit, a first nozzle part, and a second nozzle part.

### [Background Art]

When a tooth is extracted due to injury or decay, dental prosthesis is provided to form a natural interdental papilla and gingiva and recover a chewing, pronunciation, and aesthetical function. The dental prosthesis is also referred to as a denture or an artificial tooth and refers to a prosthesis that artificially replaces a natural tooth and associated tissue when the natural tooth and the associated tissue are lost. The artificial tooth is essentially used in order to prevent movement of a tooth adjacent to an extracted tooth to an abnormal position occurring during a dental treatment period.

Conventionally, an artificial tooth has been manufactured entirely by a manual operation of a dental technician, but these days, an artificial tooth machining apparatus is used to more efficiently and precisely perform an artificial tooth manufacturing operation.

A method of machining an artificial tooth through an artificial tooth machining apparatus may be roughly divided into formed-tool machining and numerical control (NC) machining.

The formed-tool machining generally refers to a method of magnification-machining a workpiece for forming an artificial tooth by moving a measurement unit along a curved surface of the workpiece and a cutting pin of a machining unit in a set magnification ratio according to the movement of the measurement unit.

The NC machining generally refers to a method of three-dimensionally scanning and measuring an artificial tooth, three-dimensionally modeling the measured scan data using a CAM program equipped with CAD/CAM software, converting the modeled data into NC data by applying a magnification ratio, and automatically machining an artificial tooth, which is the workpiece, by the machining device on the basis of the NC data.

Generally, various kinds of machine tools including a turning center, a machining center, a gantry-type machining center, a Swiss turn, an electrical discharge machine, a horizontal NC boring machine, a CNC lathe, and the like, are widely used in various industrial fields.

In the case of artificial tooth machining, in order to reduce irritation that a patient may feel with an artificial tooth, precision for machining the artificial tooth to have the same form as that of a tooth of the patient to the maximum is required.

That is, the artificial tooth machining apparatus may be able to machine the artificial tooth to match the patient's tooth when reference coordinates of the workpiece for machining the artificial tooth precisely match reference coordinates input to NC data.

Further, in order to improve machining precision during machining of the workpiece of the artificial tooth and to protect the workpiece and a tool from heat and pressure generated due to frictional contacts between the tool and the workpiece during machining, it is necessary to accurately jet water or air to a contact point between the workpiece and the tool.

However, when jetting water or air, the related art artificial tooth machining apparatus cannot accurately jet water or air to the contact point between the workpiece and the tool, damaging the tool and reducing cutting roughness of the workpiece due to chips generated during machining to reduce machining precision.

Further, in a state in which the workpiece is coupled to a clamping unit, the related art artificial tooth machining apparatus cannot convert an accurate position of the workpiece into a coordinate system thereof, and thus, accuracy of the artificial tooth machined through the artificial tooth machining apparatus may be reduced.

In particular, in the case of machining both sides of the workpiece of the artificial tooth with two spindles, in order to prevent damage to tools mounted on the two spindles or the workpiece of the artificial tooth due to a collision between the tools, the two spindles must match in axes of coordinates and synchronized and a collision of the tools of the two spindles must be prevented.

However, productivity is lowered as machining for such synchronization and tool collision prevention takes a long time, and in case where synchronization and tool collision prevention are not accurately made, the tools mounted on the two spindles may collide with each other during machining to damage the workpiece of the artificial tooth.

Further, since the related art artificial tooth machining apparatus comes into contact with the artificial tooth in a state in which the tools rotate to check an accurate position of the workpiece, the artificial tooth is damaged.

In addition, the related art artificial tooth machining apparatus consumes a large amount of time and incurs high cost for converting an exact position of the workpiece into the coordinate system thereof, increasing cost for the artificial tooth to increase the burden on the patient.

Further, in the related art artificial tooth machining apparatus, as water or air jetted from a nozzle portion of each of the two spindles and chips is (are) introduced to a base part, a mechanism operating part may be damaged, and thus, maintenance cost for the artificial tooth machining apparatus is increased and productivity is lowered.

Further, in the related art artificial tooth machining apparatus, although the tools coupled to the spindles are damaged, it is impossible to detect the damage done to the tools so the workpiece continues to be machined by the damaged tools according to a machining program, which resultantly increases cost for replacing tools and wastes the workpiece.

US 2009/0129882 A1 discloses an artificial tooth machining apparatus, which includes a bed, a housing surrounding an outer side of the bed, and a door installed on one side of the housing and opened and closed, the artificial tooth machining apparatus comprising: a base part installed above the bed inside the housing and forming a machining area of a workpiece; a clamp unit allowing the workpiece to be coupled to a tip end thereof and installed to be rotatable and horizontally movable in a portion of the base part and a first driving part moving the clamping unit in a horizontal direction, wherein the clamping unit includes a coupling hole extending in a horizontal direction and allowing the workpiece to be coupled thereto; a first spindle unit allowing a first tool to be coupled to a tip end thereof, having a first nozzle part for jetting water or air to the first tool at the time of machining the workpiece, and installed to be movable vertically and horizontally on one side of the base part so as to be perpendicular to a central axis of the clamp unit; a second spindle unit allowing a second tool to be coupled to a tip end thereof, having a second nozzle part for jetting water or air to the second tool at the time of machining the workpiece, and installed to be movable vertically and horizontally on the other side of the base part so as to be perpendicular to the central axis of the clamp unit and face the first spindle unit; a supply unit supplying water or air to the first nozzle part and the second nozzle part; and a discharge unit discharging the water or air to the outside of the machining area.

### [Disclosure]

### [Technical Problem]

An aspect of the present invention provides an artificial tooth machining apparatus which protects a workpiece and first and second tools from heat and frictional contact that may occur when the workpiece is machined and enhancing machining precision by supplying water or air to the tools by a supply unit, a first nozzle portion, and a second nozzle portion, which has a lifespan lengthened by preventing chips of the workpiece or water or air from being introduced to a mechanism operation part of a base part by a discharge unit and a blocking unit, and which prevents a collision between the first tool and the second tool during machining of the workpiece by a tool collision preventing controller.

### [Technical Solution]

According to the present invention there is provided an artificial tooth machining apparatus which includes a bed, a housing surrounding an outer side of the bed, and a door installed on one side of the housing and opened and closed, the artificial tooth machining apparatus comprising:
a base part installed above the bed inside the housing and forming a machining area of a workpiece;
a clamp unit allowing the workpiece to be coupled to a tip end thereof and installed to be rotatable and horizontally movable in a portion of the base part;
a first spindle unit allowing a first tool to be coupled to a tip end thereof,
having a first nozzle part for jetting water or air to the first tool at the time of machining the workpiece, and installed to be movable vertically and horizontally on one side of the base part so as to be perpendicular to a central axis of the clamp unit;
a second spindle unit allowing a second tool to be coupled to a tip end thereof, having a second nozzle part for jetting water or air to the second tool at the time of machining the workpiece, and installed to be movable vertically and horizontally on the other side of the base part so as to be perpendicular to the central axis of the clamp unit and face the first spindle unit;
a supply unit supplying water or air to the first nozzle part and the second nozzle part;
a discharge unit discharging the water or air to the outside of the machining area; and
a tool collision preventing controller preventing the first tool and the second tool from colliding with each other during machining of the workpiece,
wherein the clamp unit includes:a clamping part allowing the workpiece to be coupled to one end thereof;
a connecting part coupled to the other end of the clamping part;a first driving part rotating the clamping part or moving the clamping part in a horizontal direction; and
a sensing part installed in the clamp unit, and wherein the clamping part of the clamp unit includes:
   a main body part having a cavity part therein and having a conical shape; and
   a workpiece coupling part formed at one end of the main body part and including a coupling hole extending in a horizontal direction and allowing the workpiece to be coupled thereto,wherein the sensing part is installed in a position adjacent to a tip end of the coupling hole in the cavity part of the main body part, and
   wherein the connecting part of the clamp unit includes:
      a body part having a space therein and extending in a horizontal direction;
      a rotating shaft part insertedly installed in the body part such that one end thereof is connected to the first driving part and the other end thereof is connected to the clamping part; and
      a wire accommodating part formed in the rotating shaft part, extending in a horizontal direction of the body part, and accommodating an electric wire for transferring power and a signal to the sensing part,
      wherein the first nozzle part is installed at the tip end of the first spindle part to form an angle of 30° to 40° with respect to a central axis of the first tool, and
      wherein the second nozzle part is installed at the tip end of the second spindle part to form an angle of 30° to 40° with respect to a central axis of the second tool, and
      wherein the first nozzle part is provided in plurality, and the plurality of first nozzle parts are spaced apart from each other at uniform angles with respect to the central axis of the first tool on an outer circumferential surface of the front tip of the first spindle part, and
      the second nozzle part is provided in plurality, and the plurality of second nozzle parts are spaced apart from each other at uniform angles with respect to the central axis of the second tool on an outer circumferential surface of the front tip of the second spindle part,
      wherein the plurality of the first nozzle parts comprise six first nozzle parts forming three pairs, each pair being formed of two adjacent first nozzle parts and each pair of the three pairs is arranged spaced apart by 120° from one another about the central axis of the first tool, and
      wherein the plurality of the second nozzle parts comprise six second nozzle parts forming three pairs, each pair being formed of two adjacent second nozzle parts, and each pair of the three pairs is arranged spaced apart by 120° from one another about the central axis of the second tool.

Also, in another embodiment of the artificial tooth machining apparatus according to the present invention, the artificial tooth machining apparatus may further include a blocking unit preventing water or air jetted through the first nozzle part and the second nozzle part at the time of machining the workpiece from leaking out of the base part.

Also, in another embodiment of the artificial tooth machining apparatus according to the present invention, the supply unit of the artificial tooth machining apparatus may include: a water tank storing water from a water source; a water pump circulating water in the water tank; a water line supplying the water circulated by the water pump to the first nozzle part and the second nozzle part; an air pump circulating air; and an air line supplying the air circulated by the air pump to the first nozzle part and the second nozzle part.

Also, in another embodiment of the artificial tooth machining apparatus according to the present invention, the supply unit of the artificial tooth machining apparatus may further include: a water filter installed in the water tank to remove impurities contained in the circulated water.

Also, in another embodiment of the artificial tooth machining apparatus according to the present invention, the discharge unit of the artificial tooth machining apparatus may include: a filter net part having a plurality of through holes, installed at a lower portion of the base part, and intaking dust occurring at the time of machining the workpiece in the machining area; and a dust collecting part installed below the filter net part and detachably attached to the bed.

Also, in another embodiment of the artificial tooth machining apparatus according to the present invention, the discharge unit of the artificial tooth machining apparatus may further include: a fan installed between the filter net part and the dust collecting part and intaking air in the machining area.

Also, in another embodiment of the artificial tooth machining apparatus according to the present invention, water or air may be jetted from the first nozzle part and the second nozzle part before the workpiece is machined in the machining area, to clean the machining area.

Also, in another embodiment of the artificial tooth machining apparatus according to the present invention, in the case of cleaning the machining area by jetting water from the first nozzle part and the second nozzle part, air may be introduced to the machining area through the fan after the cleaning of the machining area, to dry the machining area.

Also, in another embodiment of the artificial tooth machining apparatus according to the present invention, the artificial tooth machining apparatus may further include: a correcting unit correcting a position of the workpiece in a state in which the workpiece is mounted on the clamp unit.

Also, in another embodiment of the artificial tooth machining apparatus according to the present invention, the tool collision preventing controller or the workpiece position correcting unit of the artificial tooth machining apparatus may receive data for machining the workpiece from a CAM program through wired communication or wireless communication.

Also, in another embodiment of the artificial tooth machining apparatus according to the present invention, the tool collision preventing controller of the artificial tooth machining apparatus may include: a tool reference position data storage part storing a reference position of the first tool and the second tool synchronized by the workpiece position correcting unit; a first tool movement distance data storage part storing real-time movement distance data of the first tool; a second tool movement distance data storage part storing real-time movement distance data of the second tool; an inner surface collision position data storage part storing an inner surface collision position of a predetermined workpiece; an outer surface collision position data storage part storing an outer surface collision position of a predetermined workpiece; and a collision determining part determining whether the first tool and the second tool collides according to a machining state of the workpiece.

### [Advantageous Effects]

According to the artificial tooth machining apparatus of the present invention, since water or air is supplied to the first tool and the second tool by the supply unit and the first and second nozzle parts, a workpiece and the tools may be protected from heat and frictional contact that occurs when the workpiece is machined and machining precision (or machining accuracy) may be enhanced.

Further, according to the artificial tooth machining apparatus of the present invention, since a natural frequency is measured the moment the workpiece is in contact in a state in which a tool is not rotated by a workpiece position correcting unit, the workpiece, which is a base material for forming an artificial tooth, and the tools may be prevented from being damaged.

Further, in the artificial tooth machining apparatus according to the present invention, since a minimum amount of time and cost are consumed and incurred to convert an accurate position of the workpiece into a coordinate system of the machining device in a state in which the workpiece is coupled to the clamping unit by the workpiece position correcting unit and the sensing unit, cost for the artificial tooth may be reduced to reduce the burden on the patient.

Furthermore, in the artificial tooth machining apparatus according to the present invention, damage to the tools may be detected through a length of the tools by means of the workpiece position correcting unit and the calculation unit, machining of the workpiece by a damaged tool may be prevented, basically preventing a waste of the workpiece.

Further, in the artificial tooth machining apparatus according to the present invention, chips of the workpiece, water, or air is prevented from being introduced to the mechanism operating part of the base part by the discharge unit and the blocking unit to prevent damage to the mechanism operating part, thus lengthening a lifespan of the device, enhancing productivity, and reducing maintenance cost of the artificial tooth machining apparatus.

### [Description of Drawings]

FIG. 1 is a transparent perspective view of an artificial tooth machining apparatus according to an embodiment of the present invention.
FIG. 2 is a perspective view of an artificial tooth machining apparatus in a state in which a cover and a housing are removed in FIG. 1.
FIG. 3 is a perspective view of an artificial tooth machining apparatus in a state in which a bed is removed in FIG. 2.
FIG. 4 is a front view of the artificial tooth machining apparatus illustrated in FIG. 3.
FIG. 5 is a conceptual diagram of a process of machining a workpiece with a first spindle unit and a second spindle unit.
FIG. 6 is a cross-sectional view of a clamp unit of an artificial tooth machining apparatus according to an embodiment of the present invention.
FIG. 7 is a partial perspective view of a first spindle unit in a state in which a first nozzle part is installed in FIG. 3.
FIG. 8 is a partial perspective view of a second spindle unit in a state in which a second nozzle part is installed.
FIG. 9 is a conceptual diagram of a supply unit of an artificial tooth machining apparatus according to an embodiment of the present invention.
FIG. 10 is a cross-sectional view of a discharge unit of an artificial tooth machining apparatus according to an embodiment of the present invention.
FIG. 11 is a conceptual diagram of a tool collision preventing controller of an artificial tooth machining apparatus according to an embodiment of the present invention.
FIG. 12 is a conceptual diagram of a workpiece position correcting unit of an artificial tooth machining apparatus according to an embodiment of the present invention.

### <Description of Reference numerals>

1: artificial tooth machining apparatus, 2: workpiece
3: bed, 4: housing
5: door,
100: base part, 200: clamp unit
210: clamping part, 211: main body part
212: cavity part, 213: workpiece coupling part
214: coupling hole, 220: connecting part
221: body part, 222: rotating shaft part
223: wire accommodating part, 230: first driving part
240: sensing part, 300: first spindle unit
310: first tool, 320: first spindle part
330: second driving part, 340: first nozzle part
400: second spindle unit, 410: second tool
420: second spindle part, 430: third driving part
440: second nozzle part, 500: supply unit
510: water tank, 511: water source
520: water pump,
530: water filter, 540: water line
550: air pump, 560: air line
570: connector, 600: discharge unit
610: filter net part, 611: through hole
620: dust collecting par, 630: fan
700: tool collision preventing controller
710: tool reference position data storage part
720: first tool movement distance data storage part
730: second tool movement distance data storage part
740: inner surface collision position data storage part
750: outer surface collision position data storage part
760: collision determining part, 800: blocking unit
900: workpiece position correcting unit, 910: correction adjusting part
911: workpiece basic data storage part, 912: tool data storage part
913: reference coordinate data storage part,
914: machining program data storage part, 915: reception data storage part,
916: tool coordinate data storage part, 917: signal converting part
918: converted signal data storage part, 919: filter part
920: comparing part, 921: correcting part
922: calculating part, 923: alarm signal generating part
1000: display part, A: central axis of clamp unit
B: central axis of first tool, C: central axis of second tool

### [Best Modes]

Hereinafter, embodiments of the present invention will be described in detail with reference to the accompanying drawings. In the drawings, like reference numerals are used to refer to like elements throughout.

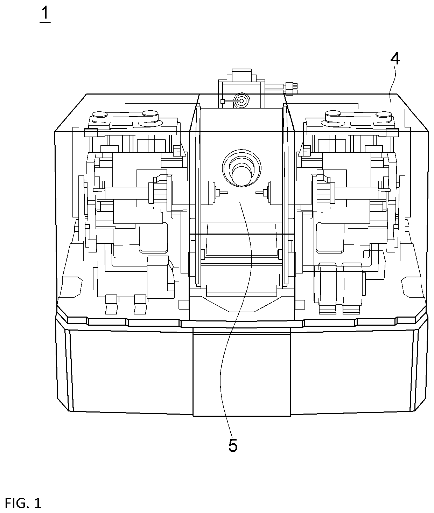

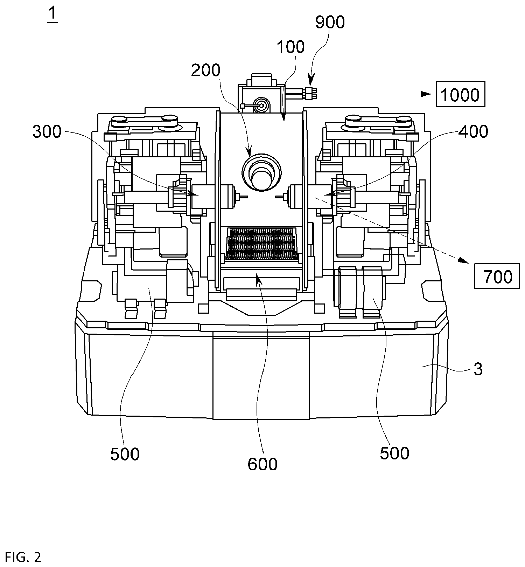

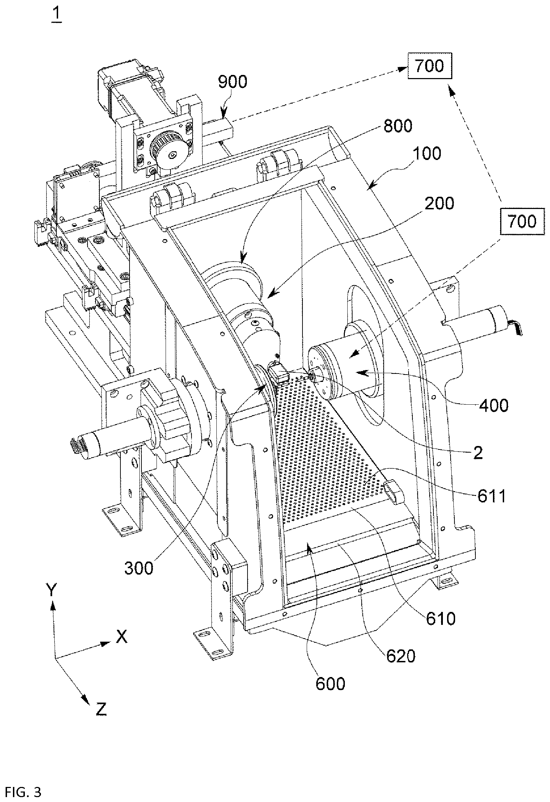

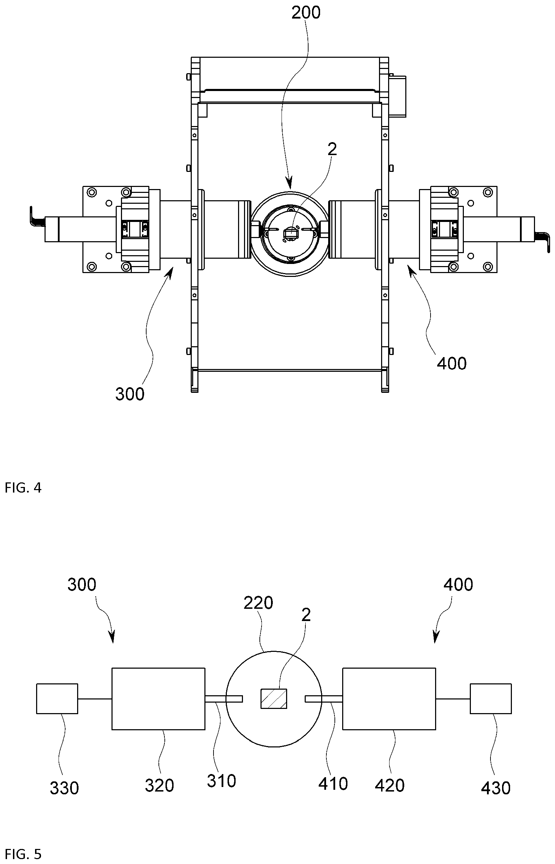

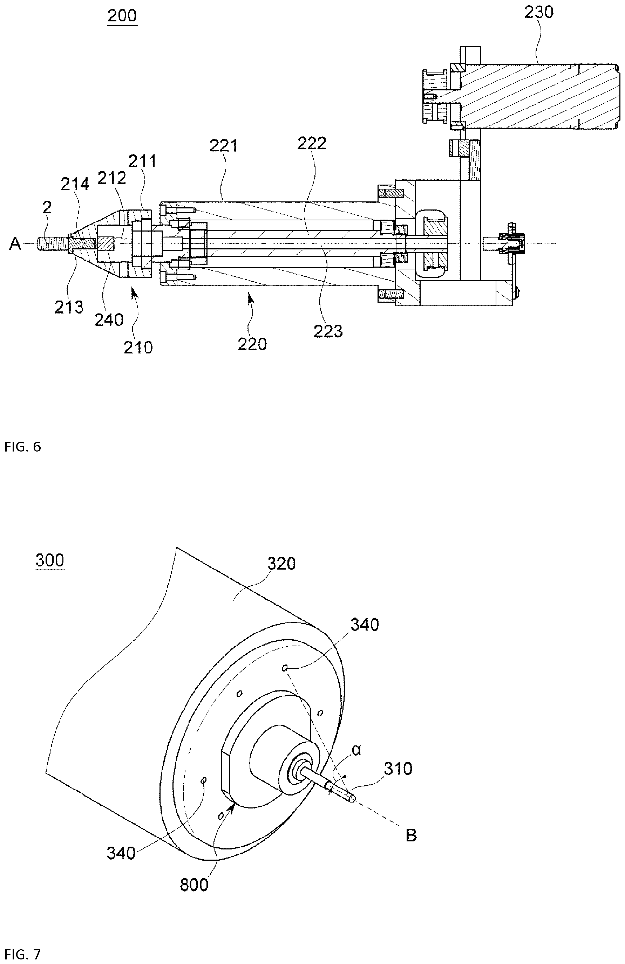

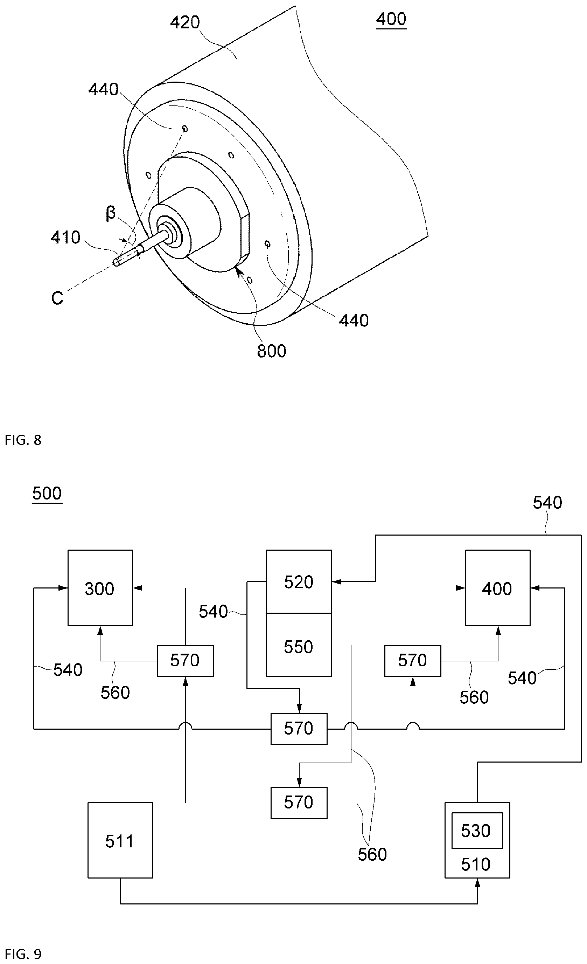

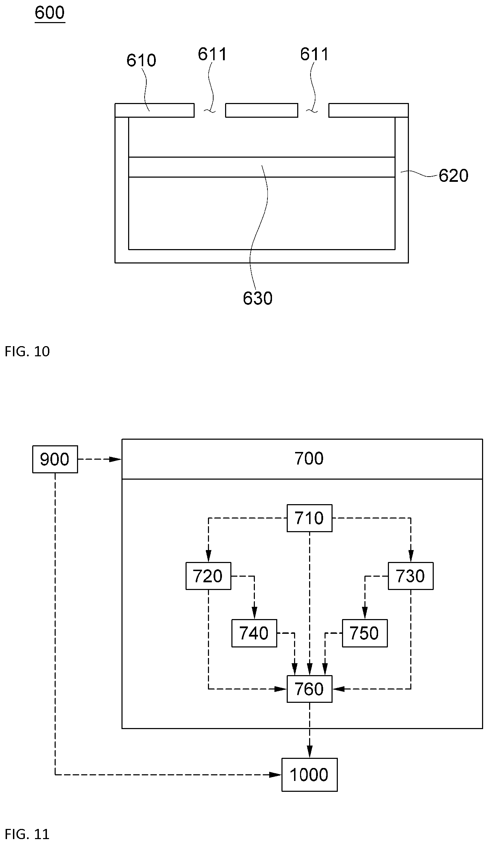

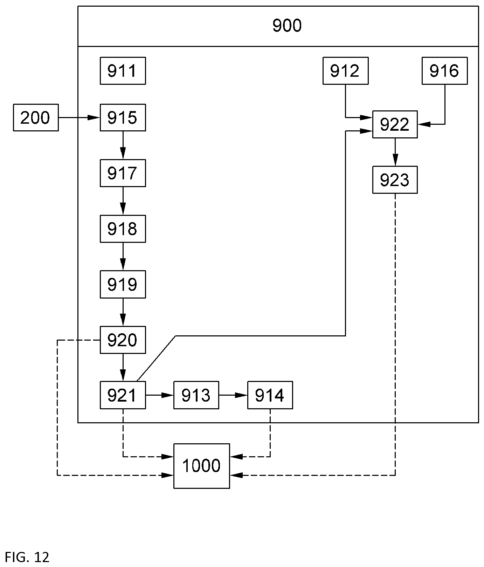

FIG. 1 is a transparent perspective view of an artificial tooth machining apparatus according to an embodiment of the present invention, FIG. 2 is a perspective view of an artificial tooth machining apparatus in a state in which a cover and a housing are removed in FIG. 1, FIG. 3 is a perspective view of an artificial tooth machining apparatus in a state in which a bed is removed in FIG. 2, FIG. 4 is a front view of the artificial tooth machining apparatus illustrated in FIG. 3, FIG. 5 is a conceptual diagram of a process of machining a workpiece with a first spindle unit and a second spindle unit, FIG. 6 is a cross-sectional view of a clamp unit of an artificial tooth machining apparatus according to an embodiment of the present invention, FIG. 7 is a partial perspective view of a first spindle unit in a state in which a first nozzle part is installed in FIG. 3, FIG. 8 is a partial perspective view of a second spindle unit in a state in which a second nozzle part is installed, FIG. 9 is a conceptual diagram of a supply unit of an artificial tooth machining apparatus according to an embodiment of the present invention, FIG. 10 is a cross-sectional view of a discharge unit of an artificial tooth machining apparatus according to an embodiment of the present invention, FIG. 11 is a conceptual diagram of a tool collision preventing controller of an artificial tooth machining apparatus according to an embodiment of the present invention, and FIG. 12 is a conceptual diagram of a workpiece position correcting unit of an artificial tooth machining apparatus according to an embodiment of the present invention.

An artificial tooth machining apparatus 1 according to an embodiment of the present invention will be described with reference to FIGS. 1 to 12. As illustrated in FIGS. 1 to 12, the artificial tooth machining apparatus 1 includes a base part 100, a clamp unit 200, a first spindle unit 300, a second spindle unit 400, a supply unit 500, and a discharge unit 600. The artificial tooth machining apparatus 1 further includes a tool collision preventing controller 700, a blocking unit 800, a workpiece position correcting unit 900, and a display part 1000.

A bed 3 is installed on the ground and provides space in which the base part 100, the clamp unit 200, the first spindle unit 300, the second spindle unit 400, the supply unit 500, the discharge unit 600, the tool collision preventing controller 700, the blocking unit 800, the workpiece position correcting unit 900, and the display part 1000 are installed. The bed 3 has a substantially rectangular parallelepiped shape to minimize space for installation but is not limited thereto.

A housing 4 surrounds the outside of the bed 3. Accordingly, a mechanism operating part installed in the bed 3 is prevented from being contaminated with a foreign material or object. Although not limited thereto, the housing 4 may be formed of a metal or plastic.

A cover 5 is provided on one side of the housing 4 such that the cover 5 is opened and closed. The cover 5 is provided to be pivotable in the form of a hinge on a front side of the housing 4 but is not limited thereto. Accordingly, an operator may open the cover 5 to mount a workpiece on the clamp unit 200 (to be described hereinafter) and lower and close the cover 5 to machine the workpiece. Also, the cover 5 may be installed to be opened and closed on one side of the housing in the form of a sliding door.

The base part 100 is installed inside the housing 4. Although not limited thereto, the base part 100 has a substantially C shape. The base part 100 may block a machining area formed inside the base part 100 from the outside by the cover 5 provided on the housing 4 when a workpiece 2 is machined.

The clamp unit 200 is installed to be rotatable and horizontally movable (Z-axis direction in FIG. 3) at a portion of the base part 100. Further, the workpiece 2 is coupled to a tip end of the clamp unit 200. Accordingly, as described hereinafter, the clamp unit 200 is configured such that a rotating shaft part 222 rotates or horizontally moves in the Z axis by driving power of a first driving part 230 in a state in which the workpiece 2 is coupled to a workpiece coupling part 213 of a clamping part 210.

The first spindle unit 300 is installed to be vertically moved (Y-axis direction in FIG. 3) and horizontally moved (X-axis direction in FIG. 3) on one side of the base part 100 so as to be perpendicular to a central axis (Z axis) of the clamp unit 200. A first tool 310 is coupled to the tip end of the first spindle unit 300. The first spindle unit 300 includes a first nozzle part 340.

As illustrated in FIG. 7, the first nozzle part 340 of the first spindle unit 300 according to an embodiment of the present invention is installed at a tip end of the first spindle part 320 and forms an angle of 30° to 40° with respect to a central axis B of the first tool 310. The first nozzle part 340 jets water or air to a contact surface of the workpiece 2 and the first tool 310 when the workpiece 2 coupled to the workpiece coupling part 213 of the clamp unit 200 is machined with the first tool 310. That is, the first nozzle part 340 jets water or air to the tip end of the first tool 310. If the angle (α) between the first nozzle part 340 and the central axis B of the first tool 310 is less than 30°, water or air jetted through the first nozzle 340 may not be accurately jetted to the tip end of the first tool 310 so loading of the first tool 310 may not be eliminated, and if the angle (α) between the first nozzle part 340 and the central axis B of the first tool 310 exceeds 40°, water or air jetted through the first nozzle part 340 may not be accurately jetted to the tip end of the first tool 310 and scatter.

Also, as illustrated in FIG. 7, the first nozzle part 340 of the first spindle unit 300 according to the present invention is provided in plurality, and the plurality of first nozzle parts 340 are installed at uniform angles with respect to the central axis B of the first tool 310 on an outer circumferential surface of the tip end of the first spindle part 320. In addition, as illustrated in FIG. 7, in the first spindle unit 300 according to the present invention, two first nozzle parts 340 are installed as a pair at positions adjacent to each other. In FIG. 7, it is illustrated that three pairs of the first nozzle parts 340 (six first nozzle parts 340) are formed at an angle of 120°. In this manner, since the plurality of first nozzles parts 340 are installed as pairs and spaced apart from each other at uniform angles with respect to the central axis B on the outer circumferential surface of the tip end of the first spindle part 320, water or air may be accurately jetted to the tip end of the first tool 310, whereby a cooling effect and lubrication effect may be maximized to prevent damage to the tools and the workpiece and cutting roughness may be enhanced to maximize machining precision.

The second spindle unit 400 is installed to be movable vertically (Y-axis direction in FIG. 3) and horizontally (X-axis direction in FIG. 3) on the other side of the base part 100. The second spindle unit 400 is perpendicular to the central axis (Z axis) of the clamp unit 200 and face the first spindle unit 300. A second tool 410 is coupled to a tip end of the second spindle unit 400. The second spindle unit 400 includes a second nozzle part 440.

As illustrated in FIG. 8, the second nozzle part 440 of the second spindle unit 400 according to an embodiment of the present invention is installed at a tip end of the second spindle part 420 and forms an angle of 30° to 40° with respect to a central axis C of the second tool 410. The second nozzle part 440 jets water or air to a contact surface of the workpiece 2 and the second tool 410 when the workpiece 2 coupled to the workpiece coupling part 213 of the clamp unit 200 is machined with the second tool 410. That is, the second nozzle part 440 jets water or air to the tip end of the second tool 410. If the angle (β) between the second nozzle part 440 and the central axis C of the second tool 410 is less than 30°, water or air jetted through the second nozzle 440 may not be accurately jetted to the tip end of the second tool 410 so loading of the second tool 410 may not be eliminated, and if the angle (β) between the second nozzle part 440 and the central axis C of the second tool 410 exceeds 40°, water or air jetted through the second nozzle part 440 may not be accurately jetted to the tip end of the first tool 410 and scatter.

Also, as illustrated in FIG. 8, the second nozzle part 440 of the second spindle unit 400 according to the present invention is provided in plurality, and the plurality of second nozzle parts 440 are installed at uniform angles with respect to the central axis C of the second tool 410 on an outer circumferential surface of the tip end of the second spindle part 420. In addition, as illustrated in FIG. 8, in the second spindle unit 400 according to the present invention, two second nozzle parts 440 are installed as a pair at positions adjacent to each other. In FIG. 8, it is illustrated that three pairs of the second nozzle parts 440 (six second nozzle parts 440) are formed at an angle of 120°. In this manner, since the plurality of second nozzles parts 440 are installed as pairs and spaced apart from each other at uniform angles with respect to the central axis C on the outer circumferential surface of the tip end of the second spindle part 420, water or air may be accurately jetted to the tip end of the second tool 410, whereby a cooling effect and lubrication effect may be maximized to prevent damage to the tools and the workpiece and cutting roughness may be enhanced to maximize machining precision.

The first tool 310 of the first spindle unit 300 machines an inner surface of the workpiece 2 and the second tool 410 of the second spindle unit 400 machines an outer surface of the workpiece 2, but the present invention is not limited thereto. In this manner, since the first spindle unit 300 and the second spindle unit 400 are disposed to face each other and perpendicular to the clamp unit 200, the workpiece may be machined rapidly.

Also, although not limited thereto, when water is jetted through the first nozzle part 410 and the second nozzle part 420, water pressure is adjusted to be 200 psi to 441 psi. Accordingly, as an optimal water pressure is maintained, water and chips may be coupled to each other during machining of the workpiece and discharged to the outside of a machining area through the discharge unit 600 installed below the base part 100 by self-load.

The supply unit 500 supplies water or air to the first nozzle part 340 and the second nozzle part 440.

As illustrated in FIG. 9, the supply unit 500 of the artificial tooth machining apparatus 1 according to another embodiment of the present invention includes a water tank 510, a water pump 520, a water filter 530, a water line 540, an air pump 550, an air line 560, and a connector 570.

The water tank 510 stores water from a water source 511. Although not limited thereto, the water source may be configured as a faucet. The water tank 510 has a rectangular parallelepiped shape or a cylindrical shape and is installed on an upper surface of the bed 3.

The water pump 520 serves to circulate water in the water tank 510.

The water filter 530 is installed inside the water tank to remove impurities such as chips contained in circulated water. Accordingly, water stored at an appropriate water level in the water tank 510 may be recycled and used, minimizing a waste of resources and reducing maintenance cost.

The water line 540 serves to supply water circulated by the water pump 520 to the first nozzle part 430 and the second nozzle part 440.

The air pump 550 performs a function of circulating air. Further, an air tank may be provided as necessary. In addition, air may be circulated by an air pump having the same function as a compressor.

The air line 560 serves to supply the air circulated by the air pump 550 to the first nozzle part 340 and the second nozzle part 440.

The connector 570 is installed at a junction or a connection portion of the air line 560 or the water line 540. The connector 570 may be formed in three phases to connect the water line 540 and the air line 560 as simply as possible and minimizes a length of the air line 560 and the water line 540 to lead to miniaturization.

Although not limited thereto, according to an embodiment of the present invention, the water line 540 and the air line 560 of the supply unit 500 are installed on the same line, whereby a size of the artificial tooth machining apparatus may be reduced, space utilization of an upper side of the bed 3 may be maximized, and movement of the first spindle unit 300 and the second spindle unit 400 may be smoothly performed.

The discharge unit 600 serves to discharge water or air to the outside of the machining area. Since water or air and chips present inside the machining area is easily discharged to the outside of the machining area by the discharge unit 600 during machining, machining precision may be enhanced.

As illustrated in FIG. 10, the discharge unit 600 of the artificial tooth machining apparatus 1 according to another embodiment of the present invention includes a filter net part 610 and a dust collecting part 620. Further, in the case of a structure for supplying air, a fan 630 may further be included.

The filter net part 610 has a plurality of through holes 611 and is provided at a lower portion of the base part 100 to serve to intake dust that occurs when the workpiece 2 is machined in the machining area. That is, in the case of a wet type, the filter net part 610 intakes chips of the workpiece 2 mixed with water supplied from the first nozzle part 340 and water supplied from the second nozzle part 440, and in the case of a dry type, the filter net part 610 serves to intake chips of the workpiece 2 mixed with air supplied from the first nozzle part 340 and air supplied from the second nozzle part 440.

The dust collecting part 620 is installed below the filter net part 610 and detachably attached to the bed 3. The dust collecting part 620 collects dust such as chips.

In the case of the dry type in which only air is jetted from the first nozzle part 340 and the second nozzle part 440 when the workpiece is machined, the fan 630 is installed between the filter net part 610 and the dust collecting part 620 to intake air inside the machining area. Accordingly, air and chips scattered in the machining area may be easily collected by the dust collecting part 620, improving machining precision.

In this manner, in the artificial tooth machining apparatus according to the present invention, since water or air is supplied to the first tool and the second tool by the supply unit and the first and second nozzle parts, the workpiece and the tools may be protected from heat and frictional contact that occur when the workpiece is machined, and machining precision may be improved.

In another embodiment of the artificial tooth machining apparatus 1 according to the present invention, before the workpiece 2 is machined in the machining area, water or air may be jetted from the first nozzle 340 and the second nozzle 440 to clean the machining area. That is, in the case of performing dry machining, air may be jetted from the first nozzle part 340 and the second nozzle part 440 to clean the machining area, and in the case of performing wet machining, water may be jetted from the first nozzle part 340 and the second nozzle part 340 to clean the machining area. In this manner, since the artificial tooth machining apparatus is not continuously used unlike other machine tools, in case where the machining area is contaminated, the first nozzle part 340 and the second nozzle part 440 may jet water or air according to the dry or wet machining form to clean the machining area before the workpiece 2 is machined in the machining area, whereby cleanliness of the machining area may be maintained and machining precision of the workpiece 2 may be enhanced.

In the embodiment of the artificial tooth machining apparatus according to the present invention, in case where water is jetted from the nozzle part 440 to clean the machining area before the workpiece 2 is machined in the machining area, air may be introduced to the machining area through the fan 630 after the machining area is cleaned to dry the machining area. Accordingly, water remaining in the machining area may be completely dried to improve cleanliness of the machining area and prevent the growth of germs, and the like.

The tool collision preventing controller 700 serves to prevent the first tool 310 and the second tool 320 from colliding with each other, while the workpiece 2 is being machined.

As illustrated in FIG. 11, the tool collision preventing controller 700 according to an embodiment of the present invention includes a tool reference position data storage part 710, a first tool movement distance data storage part 720, a second tool movement distance data storage part 730, an inner surface collision position data storage part 740, an outer surface collision position data storage part 750, and a collision determining part 760.

A reference position of the first tool 310 and the second tool synchronized by the workpiece position correcting unit 900 as described hereinafter is stored in the tool reference position data storage part 710.

Real time movement distance data of the first tool 310 is stored in the first tool movement distance data storage part 720.

Real time movement distance data of the second tool 410 is stored in the second tool movement distance data storage part 730.

An inner surface collision position of the predetermined workpiece 2 is stored in the inner surface collision position data storage part 740. That is, collision position data of the predetermined first tool 310 is stored according to a shape of a tooth to be machined.

An outer surface collision position of the predetermined workpiece 2 is stored in the outer surface collision position data storage part 750. That is, collision position data of the predetermined second tool 410 is stored according to a shape of the tooth to be machined.

The collision determining part 760 determines whether the first tool 310 and the second tool 410 collide with each other at each machining real time of the workpiece.

In this manner, in the artificial tooth machining apparatus according to the present invention, since the first tool 310 and the second tool 410 are prevented from colliding secondarily by the tool collision preventing controller 700, damage to the tools may be prevented, damage to the workpiece may be prevented, and an unnecessary waste of the workpiece may be minimized.

The blocking unit 800 prevents water or air jetted through the first nozzle part 340 and the second nozzle part 440 from leaking out of the base part 100 during machining of the workpiece 2. Although not limited thereto, the blocking unit 800 may be formed of a sealing member in the form of an O-ring. The blocking unit 800 may be installed at a fastening portion between the base part 100 and the clamp unit 200, between the base part 100 and the first spindle unit 300, and between the base part 100 and the second spindle unit 300. If necessary, the blocking unit 800 may be formed as a separate member having a labyrinth structure and installed at a contact surface of the cover 5 and the housing 4. The blocking unit 800 may also be installed between the base part 100 and the clamp unit 200, between the base part 100 and the first spindle unit 300, and between the base part 100 and the second spindle unit 300.

Therefore, in the artificial tooth machining apparatus according to the present invention, chips of the workpiece or water or air are prevented from being introduced to the mechanism operating part by means of the discharge unit and the blocking unit, whereby damage to the mechanism operating part may be prevented, a lifespan of the apparatus may be increased, productivity may be enhanced, and maintenance cost for the artificial tooth machining apparatus may be reduced.

The workpiece position correcting unit 600 serves to correct a position of the workpiece 2 in a state in which the workpiece 2 is mounted on the clamp unit 200.

As illustrated in FIGS. 1 to 6, the clamp unit 200 of the artificial tooth machining apparatus 1 includes a clamping part 210, a connecting part 220, a first driving part 230, and a sensing part 240.

The workpiece 2 is coupled to one end of the clamping part 210.

The connecting part 220 is coupled to the other end of the clamping part 210 and a portion of the connecting part 220 is installed in the base part 100 in a penetrating manner.

The first driving part 230 serves to rotate or move the clamping part 210 in a horizontal direction and is installed outside the base part 100. Although not limited thereto, the first driving part 230 may be configured as a servo motor so as to be precisely controlled by a control unit or according to an operation button provided on an operation panel of the artificial tooth machining apparatus 1.

The sensing part 240 is installed inside the clamp unit 200. Although not limited thereto, the sensing part 240 of the artificial tooth machining apparatus according to an embodiment of the present invention is configured as an acoustic sensor or a vibration sensor capable of measuring a natural frequency. Since the sensing part 240 is configured as an acoustic sensor or a vibration sensor, reference coordinates of a machining program stored in a machining program data storage part 914 to machine a workpiece may be accurately and easily corrected by measuring a natural frequency the moment the first tool 310 and the second tool 410 come into contact with the workpiece 2 coupled to the workpiece coupling part 213 without damaging the workpiece or the tools, and machining precision may be eventually improved.

Therefore, with the artificial tooth machining apparatus 1 according to the present invention, a minimum time and cost are required and incurred in order to convert an exact position of the workpiece into a coordinate system of the machining apparatus in a state in which the workpiece is coupled to the clamping part, cost for the artificial teeth may be reduced to reduce the burden on the patient.

As illustrated in FIGS. 3 to 6, the clamping part 210 of the clamp unit 200 of the artificial tooth machining apparatus 1 includes a main body part 211 and a workpiece coupling part 213.

The main body part 211 forms an outer shape of the clamping part 210. The main body part 211 has a cavity part 212 therein and has a conical shape. The cavity part 212 is maintained in a vacuum state.

The workpiece coupling part 213 is formed at one end of the main body part 211 and a coupling hole 214 to which the workpiece 2 may be coupled is formed to extend in a horizontal direction of the main body part 211. That is, as the workpiece 2 is inserted into the coupling hole 214 of the workpiece coupling part 213, the workpiece 2 may be prevented from being released from the clamping unit 200, while being machined.

The sensing part 240 is installed at a position adjacent to a tip end of the coupling hole 214 in the cavity part 212 of the main body part 211. Accordingly, in a state in which only one sensing part 240 is installed in the cavity part 212 of the main body part 211, a natural frequency the moment the first tool and the second tool come into contact with the workpiece may be easily measured, and thus, the clamp unit may be reduced in size and manufacturing cost may be reduced. Also, since the sensing part 240 is installed inside the cavity part 212 of the main body part 211, the sensing part may be prevented from being damaged by chips or cooling water generated while the workpiece 2 is being machined.

As illustrated in FIGS. 3 to 6, the connecting part 220 of the clamp unit 200 of the artificial tooth machining apparatus 1 includes a body part 221, a rotating shaft part 222, and a wire accommodating part 223.

The body part 221 has a space therein and extends in the horizontal direction (Z-axis direction). Although not limited thereto, the body part 221 has a hollow cylindrical shape.

One end of the rotating shaft part 222 is connected to the first driving part 230 and the other end thereof is inserted into the body part 221 so as to be connected to the clamping part 210. That is, when the rotating shaft part 222 is rotated according to rotation of the first driving part 230 or horizontally moved in the Z-axis direction, the clamping part 210 connected thereto is rotated or horizontally moved in the Z-axis direction, and the workpiece 2 coupled to the workpiece coupling part 213 is finally rotated or horizontally moved in the Z-axis direction. Here, alternatively, the corresponding elements may also be rotated simultaneously with horizontal movement in the Z-axis direction, if necessary.

The wire accommodating part 223 is formed in the rotating shaft part 222, extends in the horizontal direction of the body part 221, and accommodates an electric wire for supplying power to the sensing part 240 and transferring signal data sensed by the sensing part 240 to the workpiece position correcting unit 900. As the electric wire is accommodated in the wire accommodating part 223, the electric wire may be prevented from being entangled or damaged while the workpiece is being machined, and a thickness of the connecting part 220 may be reduced. That is, the size of the clamp unit 200 may be eventually reduced.

As illustrated in FIGS. 1 to 5, the first spindle unit 300 of the artificial tooth machining apparatus 1 includes the first tool 310, the first spindle part 320, the second driving part 330, and the first nozzle part 340. The first nozzle part 340 has been described above in detail, and thus, the other components of the first spindle unit 300 will be mainly described hereinafter.

The first tool 310 is mounted on the tip end of the first spindle part 320.

The first spindle part 320 is formed on one side of the first tool 310 to accommodate the first tool 310 and transfers power for rotating the first tool 310 or moving the first tool 310 in the vertical direction (Y-axis direction) or the horizontal direction (X-axis direction). Although not limited thereto, the first spindle part 320 has a cylindrical shape having a hollow part therein and has a rotating shaft therein, and .a portion of the first spindle part 320 is installed on one side of the base part 100 in a penetrating manner so as to be perpendicular with respect to a central axis of the clamp unit. Also, as necessary, the first spindle part 320 may rotate simultaneously, while horizontally moving in the X or Y-axis direction.

The second driving part 330 is installed on the other side of the first spindle part 320 to transmit power to the first spindle part 320. Although not limited thereto, the second driving part 330 is installed between the outside of the base part 100 and the housing.

As illustrated in FIGS. 1 to 5, the second spindle unit 400 of the artificial tooth machining apparatus 1 includes the second tool 410, the second spindle part 420, the third driving part 430, and the second nozzle part 440. The second nozzle part 440 has been described above in detail, and thus, the other components of the first spindle unit 300 will be mainly described hereinafter.

The second tool 410 is mounted on the tip end of the second spindle part 420.

The second spindle part 420 is formed on one side of the second tool 410 to accommodate the second tool 410 and transfers power for rotating the second tool 410 or moving the second tool 410 in the vertical direction (Y-axis direction) or the horizontal direction (X-axis direction). Although not limited thereto, the second spindle part 420 has a cylindrical shape having a hollow part therein and has a rotating shaft therein, and .a portion of the second spindle part 420 is installed on the other side of the base part 100 in a penetrating manner to face the first spindle part 320. Also, as necessary, the second spindle part 420 may rotate simultaneously, while horizontally moving in the X or Y-axis direction.

The third driving part 430 is installed on the other side of the second spindle part 420 to transfer power to the second spindle part 420. Although not limited thereto, the third driving part 430 is installed between the outside of the base part 100 and the housing.

Although not limited thereto, the second driving part 330 or the third driving part 430 may be configured as servo motors so as to be precisely controlled according to an operating button installed on an operating panel or the display part 1000 of the artificial tooth machining apparatus 1.

As illustrated in FIG. 12, the workpiece position correcting unit 900 of the artificial tooth machining apparatus 1 includes a workpiece basic data storage part 911, a tool data storage part 912, a reference coordinate data storage part 913, a machining program data storage part 914, a reception data storage part 915, a signal converting part 917, a converted signal data storage part 918, a filter part 919, a comparing part 920, and a correcting part 921.

The workpiece basic data storage part 911 stores natural frequency data according to workpieces.

The tool data storage part 912 stores data regarding lengths and types of the tools installed in the first spindle unit 300 and the second spindle unit 400.

The reference coordinate data storage part 913 stores reference coordinate data before the workpiece 2 is coupled to the workpiece coupling part 213.

The machining program data storage part 914 stores machining program data for machining the workpiece 2. That is, scan data measured by three-dimensional scanning and measured using a CAD/CAM software program is three-dimensionally modeled, to which a magnification power is applied to convert the data into NC data, and the NC data is stored in the machining program data storage part 914.

The reception data storage part 915 stores signal data transmitted from the sensing part 240 after the sensing part 240 detects a natural frequency generated the moment the first tool 310 and the second tool 410 come into contact with the workpiece coupled to the workpiece coupling part 213.

The signal converting part 917 converts a signal stored in the reception data storage part into a digital signal.

The converted signal data storage part 918 stores the signal converted by the signal converting part 917.

The filter part 919 filters the signal stored in the converted signal data storage part 918. That is, the filter part 919 serves to remove an interference signal due to noise other than a natural frequency generated the moment the first tool 310 and the second tool 410 come into contact with the workpiece coupled to the workpiece coupling part 213. Although not limited thereto, the filter part 919 is configured as an exponential smoothing filter (FLT). The exponential smoothing filter is a digital filter that uses a software algorithm configured such that signal values within a few seconds do not affect a detection signal by weighting a signal mean value within a few milliseconds and a signal value of the latest several tens of microseconds. By designating and using a surface time of a signal mean value, a weight, and a strength set value of a contact signal which are important factors in computation, the exponential smoothing filter may be able to predict a change in a state of the tools while the workpiece for the artificial tooth is being machined or effectively remove a noise component when a position and a size of the workpiece are measured, and thus, a more reliable and precise measurement value may be obtained. The exponential smoothing filter may be developed by a software filter algorithm and applied to a sensor control device. Also, factor values required for computation of the exponential smoothing filter may be applied as optimal factor values fitting each state in the sensor control device according to a state of the device being machined or a measurement state of the workpiece. Through such functions of the exponential smoothing filter, it is possible to predict and determine a damage state of the tools during machining of the workpiece.

The comparing part 920 compares the converted signal stored in the converted signal data storage part 918 or the signal filtered through the filter part 919 with a natural frequency signal stored in the workpiece basic data storage part 911.

The correcting part 921 corrects the reference coordinate data stored in the reference coordinate data storage part and the reference coordinates of the machining program stored in the machining program data storage part according to a result from the comparing part 920.

Therefore, in the artificial tooth machining apparatus, since the reference coordinates of the machining program of the workpiece for machining the artificial tooth according to a size and an installation state of the workpiece are accurately and rapidly corrected according to the installation state of the workpiece, machining precision of the artificial tooth may be enhanced, since the natural frequency is measured the moment the first tool and the second tool come into contact with the workpiece in a state in which they do not rotate, the workpiece, which is a base material for forming the artificial tooth, and the tools are prevented from being damaged, and since a minimum time and cost are required for converting an accurate position of the workpiece into a coordinate system of the machining apparatus in a state in which the workpiece is coupled to the clamp unit, cost for the artificial tooth may be reduced to reduce the burden on the patient. In addition, the first tool and the second tool may be prevented from being damaged due to a collision therebetween or the workpiece is prevented from being damaged during machining.

As illustrated in FIG. 12, the workpiece position correcting unit 900 of the artificial tooth machining apparatus 1 includes a tool coordinate data storing part 916, a calculating part 922, and an alarm signal generating part 923.

The tool coordinate data storage part 916 additionally stores coordinate data of the first tool 310 and the second tool 410 the moment the first tool 310 and the second tool 410 come into contact with the workpiece 2 coupled to the workpiece coupling part 213.

The calculating part 922 calculates current lengths of the first tool 310 and the second tool 410 by coordinate values stored in the tool data storage part 912, the reference coordinate data storage part 913, and the tool coordinate data storage part 916.

The alarm signal generating part 923 generates an alarm signal if the current lengths of the first tool 310 and the second tool 410 are different from the lengths of the first tool 310 and the second tool 410 stored in the tool data storage part 912 according to the value calculated by the calculating part 922. In detail, when the current lengths of the first tool 310 and the second tool 410 are shorter than the lengths of the first tool 310 and the second tool 410 stored in the tool data storage part 912, the alarm signal generating part 923 determines that the tools have worn or damaged, and generates an alarm signal.

Therefore, in the artificial tooth machining apparatus, since the lengths of the tools are calculated by the calculating part of the control unit and damage done to the tools is detected by the alarm signal generating part, the workpiece is prevented from being machined by damaged tools, and thus, a waste of the workpiece may be fundamentally prevented.

As illustrated in FIG. 12, the artificial tooth machining apparatus 1 may further include the display part 1000 displaying a determination result from the comparing part 920, a determination result from the correcting part 921, a determination result from the calculating part 922, the machining program stored in the machining program data storage part 914, and the alarm signal from the alarm signal generating part 923.

Therefore, in the artificial tooth machining apparatus according to the present invention, since the natural frequency is measured the moment the first tool and the second tool come into contact with the workpiece in a state in which they do not rotate, the workpiece, which is a base material for forming the artificial tooth, and the tools are prevented from being damaged, and since a minimum time and cost are required for converting an accurate position of the workpiece into a coordinate system of the machining apparatus in a state in which the workpiece is coupled to the clamp unit, cost for the artificial tooth may be reduced to reduce the burden on the patient, and machining precision of the workpiece may be enhanced.

Also, in another embodiment of the artificial tooth machining apparatus according to the present invention, the tool collision preventing controller 700 or the workpiece material position correcting unit 900 of the artificial tooth machining apparatus 1 may receive data for machining the workpiece from a CAM program through wired communication or wireless communication. That is, the tool collision preventing controller 700 or the workpiece position correcting unit 900 receives workpiece information, tool data, first tool/second tool movement distance data, and the like, for machining the workpiece from the CAM program wiredly or wirelessly using a wired or wireless communication module.

More preferably, the tool collision preventing controller 700 or the workpiece position correcting unit 900 receives data, as wireless communication, for machining the workpiece from the CAM program through a wireless communication module such as wireless Ethernet, wireless serial communication, Wi-Fi, Bluetooth, and the like. Therefore, the artificial tooth machining apparatus according to the present invention may be easily used in a narrow space.

The present invention is not limited to the drawings and the embodiments described above, but by the scope of the appended claims.

## Claims

1. An artificial tooth machining apparatus (1) which includes a bed (3), a housing (4) surrounding an outer side of the bed (3), and a door (5) installed on one side of the housing (4) and opened and closed, the artificial tooth machining apparatus (1) comprising:
a base part (100) installed above the bed (3) inside the housing (4) and forming a machining area of a workpiece (2);
a clamp unit (200) allowing the workpiece (2) to be coupled to a tip end thereof and installed to be rotatable and horizontally movable in a portion of the base part (100);
a first spindle unit (300) allowing a first tool (310) to be coupled to a tip end thereof, having a first nozzle part (340) for jetting water or air to the first tool (310) at the time of machining the workpiece (2), and installed to be movable vertically and horizontally on one side of the base part (100) so as to be perpendicular to a central axis of the clamp unit (200);
a second spindle unit (400) allowing a second tool (410) to be coupled to a tip end thereof, having a second nozzle part (440) for jetting water or air to the second tool (410) at the time of machining the workpiece (2), and installed to be movable vertically and horizontally on the other side of the base part (100) so as to be perpendicular to the central axis of the clamp unit (200) and face the first spindle unit (300);
a supply unit (500) supplying water or air to the first nozzle part (340) and the second nozzle part (440);
a discharge unit (600) discharging the water or air to the outside of the machining area; and
a tool collision preventing controller (700) preventing the first tool (310) and the second tool (410) from colliding with each other during machining of the workpiece (2),
wherein the clamp unit (200) includes:
a clamping part (210) allowing the workpiece (2) to be coupled to one end thereof;
a connecting part (220) coupled to the other end of the clamping part (210);
a first driving part (230) rotating the clamping part (210) or moving the clamping part (210) in a horizontal direction; and
a sensing part (240) installed in the clamp unit (200), and
wherein the clamping part (210) of the clamp unit (200) includes:
a main body part (211) having a cavity part (212) therein and having a conical shape; and
a workpiece coupling part (213) formed at one end of the main body part (211) and including a coupling hole (214) extending in a horizontal direction and allowing the workpiece (2) to be coupled thereto,
wherein the sensing part (240) is installed in a position adjacent to a tip end of the coupling hole (214) in the cavity part (212) of the main body part (211), and
wherein the connecting part (220) of the clamp unit (200) includes:
a body part (221) having a space therein and extending in a horizontal direction;
a rotating shaft part (222) insertedly installed in the body part (221) such that one end thereof is connected to the first driving part (230) and the other end thereof is connected to the clamping part (210); and
a wire accommodating part (223) formed in the rotating shaft part (222), extending in a horizontal direction of the body part (221), and accommodating an electric wire for transferring power and a signal to the sensing part (240),
wherein the first nozzle part (340) is installed at the tip end of the first spindle part (320) to form an angle of 30° to 40° with respect to a central axis of the first tool (310), and
wherein the second nozzle part (440) is installed at the tip end of the second spindle part (420) to form an angle of 30° to 40° with respect to a central axis of the second tool (410), and
wherein the first nozzle part (340) is provided in plurality, and the plurality of first nozzle parts (340) are spaced apart from each other at uniform angles with respect to the central axis of the first tool (310) on an outer circumferential surface of the front tip of the first spindle part (320), and
the second nozzle part (440) is provided in plurality, and the plurality of second nozzle parts (440) are spaced apart from each other at uniform angles with respect to the central axis of the second tool (410) on an outer circumferential surface of the front tip of the second spindle part (420),
wherein the plurality of the first nozzle parts (340) comprise six first nozzle parts forming three pairs, each pair being formed of two adjacent first nozzle parts (340) and each pair of the three pairs is arranged spaced apart by 120° from one another about the central axis of the first tool (310), and
wherein the plurality of the second nozzle parts (440) comprise six second nozzle parts forming three pairs, each pair being formed of two adjacent second nozzle parts (440), and each pair of the three pairs is arranged spaced apart by 120° from one another about the central axis of the second tool (420).

2. The artificial tooth machining apparatus (1) of claim 1, further comprising:
a blocking unit (800) preventing water or air jetted through the first nozzle part (340) and the second nozzle part (440) at the time of machining the workpiece (2) from leaking out of the base part (100).

3. The artificial tooth machining apparatus (1) of claim 2, wherein
the supply unit (500) includes:
a water tank (510) storing water from a water source (511);
a water pump (520) circulating water in the water tank (510);
a water line (540) supplying the water circulated by the water pump (520) to the first nozzle part (340) and the second nozzle part (440);
an air pump (550) circulating air; and
an air line (560) supplying the air circulated by the air pump (550) to the first nozzle part (340) and the second nozzle part (440).

4. The artificial tooth machining apparatus (1) of claim 3, wherein
the supply unit (500) further includes a water filter (530) installed in the water tank (510) to remove impurities contained in the circulated water.

5. The artificial tooth machining apparatus (1) of claim 4, wherein
the discharge unit (600) includes:
a filter part (919) having a plurality of through holes (611), installed at a lower portion of the base part (100), and intaking dust occurring at the time of machining the workpiece (2) in the machining area; and
a dust collecting part (620) installed below the filter part (919) and detachably attached to the bed (3).

6. The artificial tooth machining apparatus (1) of claim 5, wherein
the discharge unit (600) further includes a fan (630) installed between the filter part (919) and the dust collecting part (620) and intaking air in the machining area.

7. The artificial tooth machining apparatus (1) of claim 6, wherein
water or air is adapted to be jetted from the first nozzle part (340) and the second nozzle part (440) before the workpiece (2) is machined in the machining area, to clean the machining area.

8. The artificial tooth machining apparatus (1) of claim 7, wherein
in the case of cleaning the machining area by jetting water from the first nozzle part (340) and the second nozzle part (440), air is adapted to be introduced to the machining area through the fan (630) after the cleaning of the machining area, to dry the machining area.

9. The artificial tooth machining apparatus (1) of claim 5, wherein
the tool collision preventing controller (700) is adapted to receive data for machining the workpiece (2) from a CAM program through wired communication or wireless communication.

## Patentansprüche

1. Vorrichtung (1) zum Bearbeiten eines künstlichen Zahns, die ein Bett (3), ein Gehäuse (4), das eine Außenseite des Betts (3) umgibt, und eine Tür (5) umfasst, die auf einer Seite des Gehäuses (4) installiert ist und geöffnet und geschlossen wird, wobei die Vorrichtung (1) zum Bearbeiten eines künstlichen Zahns umfasst:
einen Basisteil (100), der über dem Bett (3) innerhalb des Gehäuses (4) installiert ist und einen Bearbeitungsbereich eines Werkstücks (2) bildet;
eine Klemmeneinheit (200), die es erlaubt, dass das Werkstück (2) mit einem Spitzenende davon gekoppelt ist, und die derart installiert ist, dass sie drehbar und in einem Abschnitt des Basisteils (100) horizontal bewegbar ist;
eine erste Spindeleinheit (300), die es erlaubt, dass ein erstes Werkzeug (310) mit einem Spitzenende davon gekoppelt ist, die einen ersten Düsenteil (340) zum Strahlen von Wasser oder Luft zu dem ersten Werkzeug (310) zum Zeitpunkt des Bearbeitens des Werkstücks (2) aufweist und derart installiert ist, dass sie auf einer Seite des Basisteils (100) vertikal und horizontal beweglich ist, so dass sie zu einer zentralen Achse der Klemmeneinheit (200) senkrecht ist;
eine zweite Spindeleinheit (400), die es erlaubt, dass ein zweites Werkzeug (410) mit einem Spitzenende davon gekoppelt ist, die einen zweiten Düsenteil (440) zum Strahlen von Wasser oder Luft zu dem zweiten Werkzeug (410) zum Zeitpunkt des Bearbeitens des Werkstücks (2) aufweist und derart installiert ist, dass sie auf der anderen Seite des Basisteils (100) vertikal und horizontal beweglich ist, so dass sie zu der zentralen Achse der Klemmeneinheit (200) senkrecht ist und der ersten Spindeleinheit (300) zugewandt ist;
eine Zuführeinheit (500), die dem ersten Düsenteil (340) und dem zweiten Düsenteil (440) Wasser oder Luft zuführt;
eine Abführeinheit (600), die das Wasser oder die Luft zur Außenseite des Bearbeitungsbereichs abführt; und
eine Werkzeugkollisionsverhinderungssteuervorrichtung (700), die verhindert, dass das erste Werkzeug (310) und das zweite Werkzeug (410) während des Bearbeitens des Werkstücks (2) miteinander kollidieren,
wobei die Klemmeneinheit (200) umfasst:
einen Klemmteil (210), der es dem Werkstück (2) erlaubt, mit einem Ende davon gekoppelt zu sein;
einen Verbindungsteil (220), der mit dem anderen Ende des Klemmteils (210) gekoppelt ist;
einen ersten Antriebsteil (230), der den Klemmteil (210) dreht oder den Klemmteil (210) in einer horizontalen Richtung bewegt; und
einen Sensorteil (240), der in der Klemmeneinheit (200) installiert ist, und
wobei der Klemmteil (210) der Klemmeneinheit (200) umfasst:
einen Hauptkörperteil (211), der einen Hohlraumteil (212) darin aufweist und eine konische Form aufweist; und
einen Werkstückkopplungsteil (213), der an einem Ende des Hauptkörperteils (211) ausgebildet ist und ein Kopplungsloch (214) umfasst, das sich in einer horizontalen Richtung erstreckt und es dem Werkstück (2) erlaubt, damit gekoppelt zu sein,
wobei der Sensorteil (240) in einer Position installiert ist, die an ein Spitzenende des Kopplungslochs (214) in dem Hohlraumteil (212) des Hauptkörperteils (211) angrenzt, und
wobei der Verbindungsteil (220) der Klemmeneinheit (200) umfasst:
einen Körperteil (221), der einen Raum darin aufweist und sich in einer horizontalen Richtung erstreckt;
einen Drehwellenteil (222), der auf einsetzbare Weise in dem Körperteil (221) derart installiert ist, dass sein eines Ende mit dem ersten Antriebsteil (230) und sein anderes Ende mit dem Klemmteil (210) verbunden ist; und
einen Drahtaufnahmeteil (223), der in dem Drehwellenteil (222) ausgebildet ist, sich in einer horizontalen Richtung des Körperteils (221) erstreckt und einen elektrischen Draht aufnimmt, um Leistung und ein Signal an den Sensorteil (240) zu übertragen,
wobei der erste Düsenteil (340) an dem Spitzenende des ersten Spindelteils (320) derart installiert ist, dass er einen Winkel von 30° bis 40° mit Bezug auf eine zentrale Achse des ersten Werkzeugs (310) bildet, und
wobei der zweite Düsenteil (440) an dem Spitzenende des zweiten Spindelteils (420) derart installiert ist, dass er einen Winkel von 30° bis 40° mit Bezug auf eine zentrale Achse des zweiten Werkzeugs (410) bildet, und
wobei der erste Düsenteil (340) in Vielzahl vorgesehen ist, und die Vielzahl von ersten Düsenteilen (340) voneinander in gleichförmigen Winkeln mit Bezug auf die zentrale Achse des ersten Werkzeugs (310) auf einer äußeren Umfangsoberfläche der vorderen Spitze des ersten Spindelteils (320) beabstandet ist, und
der zweite Düsenteil (440) in Vielzahl vorgesehen ist, und die Vielzahl von zweiten Düsenteilen (440) voneinander in gleichförmigen Winkeln mit Bezug auf die zentrale Achse des zweiten Werkzeugs (410) auf einer äußeren Umfangsoberfläche der vorderen Spitze des zweiten Spindelteils (420) beabstandet ist,
wobei die Vielzahl der ersten Düsenteile (340) sechs erste Düsenteile umfasst, die drei Paare bilden, wobei jedes Paar von zwei benachbarten ersten Düsenteilen (340) gebildet ist, und jedes Paar der drei Paare voneinander um 120° beabstandet um die zentrale Achse des ersten Werkzeugs (310) angeordnet ist, und
wobei die Vielzahl der zweiten Düsenteile (440) sechs zweite Düsenteile umfasst, die drei Paare bilden, wobei jedes Paar von zwei benachbarten zweiten Düsenteilen (440) gebildet ist, und jedes Paar der drei Paare voneinander um 120° beabstandet um die zentrale Achse des zweiten Werkzeugs (410) angeordnet ist.

2. Vorrichtung (1) zum Bearbeiten eines künstlichen Zahns nach Anspruch 1, ferner umfassend:
eine Blockierungseinheit (800), die eine Leckage von Wasser oder Luft, die zum Zeitpunkt des Bearbeitens des Werkstücks (2) durch den ersten Düsenteil (340) und den zweiten Düsenteil (440) gestrahlt werden, aus dem Basisteil (100) verhindert.

3. Vorrichtung (1) zum Bearbeiten eines künstlichen Zahns nach Anspruch 2, wobei die Zuführeinheit (500) umfasst:
einen Wassertank (510), der Wasser aus einer Wasserquelle (511) speichert;
eine Wasserpumpe (520), die Wasser in dem Wassertank (510) zirkulieren lässt;
eine Wasserleitung (540), die das durch die Wasserpumpe (520) zirkulieren gelassene Wasser dem ersten Düsenteil (340) und dem zweiten Düsenteil (440) zuführt;
eine Luftpumpe (550), die Luft zirkulieren lässt; und
eine Luftleitung (560), die die von der Luftpumpe (550) zirkulieren gelassene Luft dem ersten Düsenteil (340) und dem zweiten Düsenteil (440) zuführt.

4. Vorrichtung (1) zum Bearbeiten eines künstlichen Zahns nach Anspruch 3, wobei
die Zuführeinheit (500) ferner einen Wasserfilter (530) umfasst, der in dem Wassertank (510) installiert ist, um in dem zirkulieren gelassenen Wasser enthaltene Unreinheiten zu entfernen.

5. Vorrichtung (1) zum Bearbeiten eines künstlichen Zahns nach Anspruch 4, wobei
die Abführeinheit (600) umfasst:
einen Filterteil (919), der eine Vielzahl von Durchgangslöchern (611) aufweist, die in einem unteren Abschnitt des Basisteils (100) installiert ist und Staub einlässt, der zum Zeitpunkt des Bearbeitens des Werkstücks (2) in dem Bearbeitungsbereich auftritt; und
einen Staubsammelteil (620), der unter dem Filterteil (919) installiert ist und abnehmbar an dem Bett (3) befestigt ist.

6. Vorrichtung (1) zum Bearbeiten eines künstlichen Zahns nach Anspruch 5, wobei
die Abführeinheit (600) ferner ein Gebläse (630) umfasst, das zwischen dem Filterteil (919) und dem Staubsammelteil (620) installiert ist und Luft in den Bearbeitungsbereich einsaugt.

7. Vorrichtung (1) zum Bearbeiten eines künstlichen Zahns nach Anspruch 6, wobei
Wasser oder Luft dazu ausgelegt ist, von dem ersten Düsenteil (340) und dem zweiten Düsenteil (440) gestrahlt zu werden, bevor das Werkstück (2) in dem Bearbeitungsbereich bearbeitet wird, um den Bearbeitungsbereich zu reinigen.

8. Vorrichtung (1) zum Bearbeiten eines künstlichen Zahns nach Anspruch 7, wobei
im Falle eines Reinigens des Bearbeitungsbereichs durch Strahlen von Wasser von dem ersten Düsenteil (340) und dem zweiten Düsenteil (440), Luft dazu ausgelegt ist, nach dem Reinigen des Bearbeitungsbereichs durch das Gebläse (630) in den Bearbeitungsbereich eingeführt zu werden, um den Bearbeitungsbereich zu trocknen.

9. Vorrichtung (1) zum Bearbeiten eines künstlichen Zahns nach Anspruch 5, wobei
die Werkzeugkollisionsverhinderungssteuervorrichtung (700) dazu ausgelegt ist, Daten zum Bearbeiten des Werkstücks (2) von einem CAM-Programm durch drahtgebundene oder drahtlose Kommunikation zu empfangen.

## Revendications

1. Appareil d'usinage d'une dent artificielle (1) qui inclut un bâti (3), un logement (4) entourant un côté externe du bâti (3) et une porte (5) installée sur un côté du logement (4) et ouvert et fermé, l'appareil d'usinage de la dent artificielle (1) comprenant :
une pièce de base (100) installée au-dessus du bâti (3) à l'intérieur du logement (4) et formant une zone d'usinage d'une pièce à travailler (2),
une unité d'étau (200) permettant le couplage de la pièce à travailler (2) avec l'extrémité de celle-ci et installée pour pouvoir pivoter et mobile horizontalement dans une partie de la pièce de base (100),
une première unité de bielle (300) permettant à un premier outil (310) d'être couplé à une extrémité de celle-ci, ayant une première pièce de buse (340) pour projeter de l'eau ou de l'air vers le premier outil (310) au moment de l'usinage de la pièce à travailler (2) et installé pour être mobile verticalement et horizontalement sur un côté de la pièce de base (100) de manière à être perpendiculaire à un axe central de l'unité d'étau (200),
une deuxième unité de bielle (400) permettant à un deuxième outil (410) d'être couplé à une extrémité de celle-ci, ayant une deuxième pièce de buse (440) pour projeter de l'eau ou de l'air du deuxième outil (410) au moment de l'usinage de la pièce à travailler (2) et installé pour être mobile verticalement et horizontalement de l'autre côté de la pièce de base (100) de manière à être perpendiculaire à l'axe central de l'unité d'étau (200) et fait face à la première unité de bielle (300),
une unité d'alimentation (500) fournissant de l'eau ou de l'air à la première pièce de buse (340) et la deuxième pièce de buse (440),
une unité de déchargement (600) déchargeant l'eau ou l'air à l'extérieur de la zone d'usinage et
un contrôleur (700) empêchant la collision des outils empêchant le premier outil (310) et le deuxième outil (410) d'entrer en collision l'un avec l'autre pendant l'usinage de la pièce à travailler (2),
où l'unité d'étau (200) inclut :
une pièce de serrage (210) permettant le couplage de la pièce à travailler (2) à une extrémité de celle-ci,
une pièce de connexion (220) couplée à l'autre extrémité de la pièce de serrage (210),
une première pièce d'entraînement (230) faisant pivoter la pièce de serrage (210) ou déplaçant la pièce de serrage (210) dans une direction horizontale et
une pièce de détection (240) installée dans l'unité d'étau (200) et
où la pièce de serrage (210) de l'unité d'étau (200) inclut :
une pièce de corps principal (211) ayant une pièce de cavité (212) à l'intérieur et ayant une forme conique et
une pièce de couplage de la pièce à travailler (213) formée au niveau d'une extrémité de la pièce de corps principal (211) et incluant un orifice de couplage (214) s'étendant dans une direction horizontale et permettant à la pièce à travailler (2) d'être couplée à celle-ci,
où la pièce de détection (240) est installée dans une position adjacente à une extrémité de l'orifice de couplage (214) dans la pièce de cavité (212) de la pièce de corps principal (211) et
où la pièce de connexion (220) de l'unité d'étau (200) inclut :
une pièce de corps (221) ayant un espace à l'intérieur et s'étendant dans une direction horizontale,
une pièce d'essieu pivotante (222) installée par insertion dans la pièce de corps (221) de telle manière qu'une extrémité de celle-ci est connectée à la première pièce d'entraînement (230) et l'autre extrémité de celle-ci est connectée à la pièce de serrage (210) et
une pièce d'accueil du câble (223) formée dans la pièce d'essieu pivotante (222), s'étendant dans une direction horizontale de la pièce de corps (221), et accueillant un câble électrique pour transférer du courant et un signal à la pièce de détection (240),
où la première pièce de buse (340) est installée au niveau de l'extrémité de la première pièce de bielle (320) pour former un angle de 30° à 40° par rapport à un axe central du premier outil (310) et
où la deuxième pièce de buse (440) est installée au niveau de l'extrémité de la deuxième pièce de bielle (420) pour former un angle de 30° à 40° par rapport à un axe central du deuxième outil (410) et
où la première pièce de buse (340) est prévue en pluralité et la pluralité de premières pièces de buses (340) sont espacées les unes des autres à des angles uniformes par rapport à l'axe central du premier outil (310) sur une surface circonférentielle externe de l'extrémité avant de la première pièce de bielle (320) et
la deuxième pièce de buse (440) est prévue en pluralité et la pluralité de deuxièmes pièces de buses (440) sont espacées les unes des autres à des angles uniformes par rapport à l'axe central du deuxième outil (410) sur une surface circonférentielle externe de l'extrémité avant de la deuxième pièce de bielle (420),
où la pluralité de premières pièces de buses (340) comprend six premières pièces de buses formant trois paires, chaque paire étant formée de deux premières pièces de buses adjacentes (340) et chaque paire des trois paires est placée séparée par 120° l'une de l'autre autour de l'axe central du premier outil (310) et
où la pluralité de deuxièmes pièces de buses (440) comprend six deuxièmes pièces de buses formant trois paires, chaque paire étant formée de deux deuxièmes pièces de buses adjacentes (440) et chaque paire des trois paires est placée séparée par 120° l'une de l'autre autour de l'axe central du deuxième outil (410).

2. Appareil d'usinage d'une dent artificielle (1) selon la revendication 1, comprenant en outre :
une unité de blocage (800) empêchant l'eau ou l'air projetée à travers la première pièce de buse (340) et la deuxième pièce de buse (440) au moment de l'usinage de la pièce à travailler (2) de fuir hors de la pièce de base (100) .

3. Appareil d'usinage d'une dent artificielle (1) selon la revendication 2, **caractérisé en ce que** l'unité d'alimentation (500) inclut :
un réservoir d'eau (510) stockant de l'eau depuis une source d'eau (511),
une pompe à eau (520) faisant circuler l'eau dans le réservoir d'eau (510),
un tuyau à eau (540) apportant l'eau mise en circulation par la pompe à eau (520) à la première pièce de buse (340) et la deuxième pièce de buse (440),
une pompe à air (550) faisant circuler l'air et
un tuyau à air (560) apportant l'air mis en circulation par la pompe à air (550) à la première pièce de buse (340) et la deuxième pièce de buse (440).

4. Appareil d'usinage d'une dent artificielle (1) selon la revendication 3, **caractérisé en ce que** l'unité d'alimentation (500) inclut en outre un filtre à eau (530) installé dans le réservoir d'eau (510) pour retirer les impuretés contenues dans l'eau en circulation.

5. Appareil d'usinage d'une dent artificielle (1) selon la revendication 4, **caractérisé en ce que** l'unité de déchargement (600) inclut :
une pièce de filtre (919) ayant une pluralité d'orifices traversants (611), installés au niveau d'une partie inférieure de la pièce de base (100) et aspirant la poussière produite au moment de l'usinage de la pièce à travailler (2) dans la zone d'usinage et
une pièce de collecte de la poussière (620) installée sous la pièce de filtre (919) et fixée de manière détachable à la base (3).

6. Appareil d'usinage d'une dent artificielle (1) selon la revendication 5, **caractérisé en ce que** l'unité de déchargement (600) inclut en outre un ventilateur (630) installé entre la pièce de filtre (919) et la pièce de collecte de la poussière (620) et aspirant l'air dans la zone d'usinage.

7. Appareil d'usinage d'une dent artificielle (1) selon la revendication 6, **caractérisé en ce que** l'air et l'eau sont adaptés à être projetés depuis la première pièce de buse (340) et la deuxième pièce de buse (440) avant que la pièce à travailler (2) soit usinée dans la zone d'usinage, pour nettoyer la zone d'usinage.

8. Appareil d'usinage de dent artificielle (1) selon la revendication 7, **caractérisé en ce que** dans le cas du nettoyage de la zone d'usinage par projection d'eau depuis la première pièce de buse (340) et la deuxième pièce de buse (440), l'air est adapté à être introduit dans la zone d'usinage à travers le ventilateur (630) après le nettoyage de la zone de nettoyage, pour sécher la zone d'usinage.

9. Appareil d'usinage de dent artificielle (1) selon la revendication 5, **caractérisé en ce que** le contrôleur empêchant la collision des outils (700) est adapté à recevoir des données pour usiner la pièce à travailler (2) à partir d'un programme CAM par communication filaire ou par communication sans fil.
